# EUROPEAN PATENT SPECIFICATION

(11) **EP 3 543 815 B1**
(45) Date of publication and mention of the grant of the patent: **18.08.2021**
(21) Application number: 19163794.1
(22) Date of filing: 19.03.2019
(51) Int. Cl.: G05B 19/418, H04L 12/40

(54) **GATEWAY SYSTEM FOR HETEROGENEOUS FIELDBUS**
GATEWAY-SYSTEM FÜR HETEROGENEN FELDBUS
SYSTÈME DE PASSERELLE POUR BUS DE TERRAIN HÉTÉROGÈNE

(30) Priority: 21.03.2018 KR 20180032480
(43) Date of publication of application: 25.09.2019
(73) Proprietor: LSIS Co., Ltd., Gyeonggi-do 14119 (KR)
(72) Inventor: KIM, Jong-Chan, 14118 Gyeonggi-do (KR); YANG, Chun-Suk, 14118 Gyeonggi-do (KR)
(74) Representative: K&L Gates LLP

(56) References cited:
- Ida Modbus: "MODBUS Messaging on TCP/IP Implementation Guide V1.0b", , 24 October 2006 (2006-10-24), XP055599372, Retrieved from the Internet: URL:http://www.modbus.org/docs/Modbus_Mess aging_Implementation_Guide_V1_0b.pdf [retrieved on 2019-06-25]
- Modbus Org ET AL: "MODBUS over serial line specification and implementation guide V1.02 MODBUS over Serial Line Specification and Implementation Guide Modbus.org", , 20 December 2006 (2006-12-20), XP055599399, Retrieved from the Internet: URL:http://www.modbus.org/docs/Modbus_over _serial_line_V1_02.pdf [retrieved on 2019-06-25]

## Description

### TECHNICAL FIELD

The present disclosure relates to a gateway system for a heterogeneous fieldbus.

### BACKGROUND

In order to monitor or control industrial devices such as an inverter and a programmable logic controller (PLC), intercommunication connectivity therebetween may be realized via various fieldbus communications. The fieldbus may be a generic term of industrial computer network protocols used for real-time distributed control.

The user may monitor or control an intermediate control system such as the PLC via the fieldbus communications from a top-level control system. The intermediate control system monitors or controls the lowest level device such as the inverter via the fieldbus communication. Alternatively, the user may directly monitor or control the lowest level device such as the inverter via the fieldbus communication from the highest control system.

There are various fieldbus communication equipment and protocols for monitoring or controlling these industrial devices. In recent years, an advanced network-based service such as a cloud service for industrial devices have become an important factor in determining product competitiveness. For this purpose, the fieldbus communication based on existing serial communications RS232 and RS485 such as low cost Modbus/RTU (Remote Terminal Unit) has been changed to the fieldbus communication based on Ethernet communication such as MODBUS/TCP (Transmission Control Protocol), Ethernet/IP (Internet Protocol), EtherCAT, PROFInet, etc.

However, the Ethernet based fieldbus communication equipment is expensive. Thus, it is installed not by default but optionally in the lowest level equipment such as an inverter. Only the serial communication based communication equipment such as Modbus/RTU is installed by default in the lowest level device. Therefore, a gateway system is employed for communication between the highest-level control system and the lowest-level device.

This heterogeneous fieldbus communication scheme is cost effective, but has a problem such as a speed limitation in monitoring or controlling from the user.

MODBUS Messaging on TCP/IP Implementation Guide V1.0b, Modbus-IDA (24 October 2006), XP055599372, discloses a MODBUS messaging service system for a client/server communication between devices connected on an Ethernet TCP/IP network. The system includes a MODBUS TCP/IP client and server devices connected to a TCP/IP network and interconnection devices like bridge, router or gateway for interconnection between the TCP/IP network and a serial line sub-network which permit connections of MODBUS serial line client and server end devices.

MODBUS over Serial Line Specification and Implementation Guide V1.02, Modbus.org (20 December 2006), XP055599399 discloses a MODBUS protocol over serial line.

### SUMMARY

In order to solve the problem, a purpose of the present disclosure is to provide a gateway system for a heterogeneous fieldbus which improves communication efficiency of a heterogeneous fieldbus based communication network.

The present invention is defined by the features of independent claim. Preferred beneficial embodiments thereof are defined by the sub-features of the dependent claims.

According to the present disclosure, when a control device transmits a same monitoring or control command to all or some of lowest level devices, a master inverter directly sends the corresponding command to slave inverters without intervention of the control device. This may improve the efficiency of communication data processing as compared with the prior art.

Thus, the present invention may allow the total execution time for sending the monitoring or control command to the lower-level devices and receiving the responses therefrom to be reduced. This shortening rate of the execution time duration increases as the number of the lower-level devices increases. This may allow the number of the lower-level devices to be increased, thus reducing a system cost and increasing an utility of the system, compared with the conventional fieldbus communication scheme. This may ensure the system product competitiveness.

Further specific effects of the present disclosure as well as the effects as described above will be described in conduction with illustrations of specific details for carrying out the invention.

### BRIEF DESCRIPTION OF THE DRAWINGS

FIG. 1 shows a configuration diagram of a Ethernet-based fieldbus communication network.
FIG. 2A shows a structure diagram of a heterogeneous fieldbus communication network.
FIG. 2B is an example schematic diagram for illustrating a communication scheme of the heterogeneous fieldbus communication network in FIG. 2A.
FIG. 3A illustrates a communication protocol of Ethernet communication.
FIG. 3B illustrates a communication protocol of serial communication.
FIG. 4 is a time-based graphical representation of an operational flow and a communication flow in a conventional Ethernet communication and serial communication combined manner.
FIG. 5 is a schematic configuration diagram of a gateway system for a heterogeneous fieldbus in accordance with one embodiment of the present disclosure.
FIG. 6 is an example time-based graphical representation of operational and communication flows in accordance with one embodiment of the present disclosure.
FIG. 7 is an example time-based graphical representation of an operational flow and a communication flow in accordance with another embodiment of the present disclosure.

### DETAILED DESCRIPTION

Hereinafter, a gateway system for a heterogeneous fieldbus in accordance with the present disclosure will be described with refence to the accompanying drawings.

For simplicity and clarity of illustration, elements in the figures are not necessarily drawn to scale. The same reference numbers in different figures denote the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Unless defined otherwise, all terms used herein have the same meaning as commonly understood by one of ordinary skill in the art. When the terms used herein are in conflict with a general meaning of the term, the meaning of the term is in accordance with a definition used herein.

Examples of various embodiments are illustrated and described further below.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of' when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

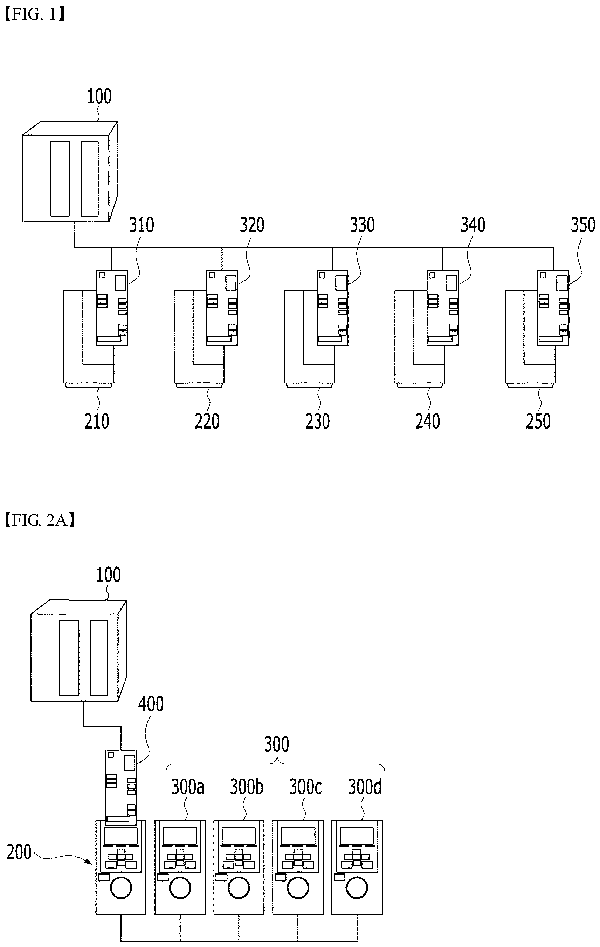

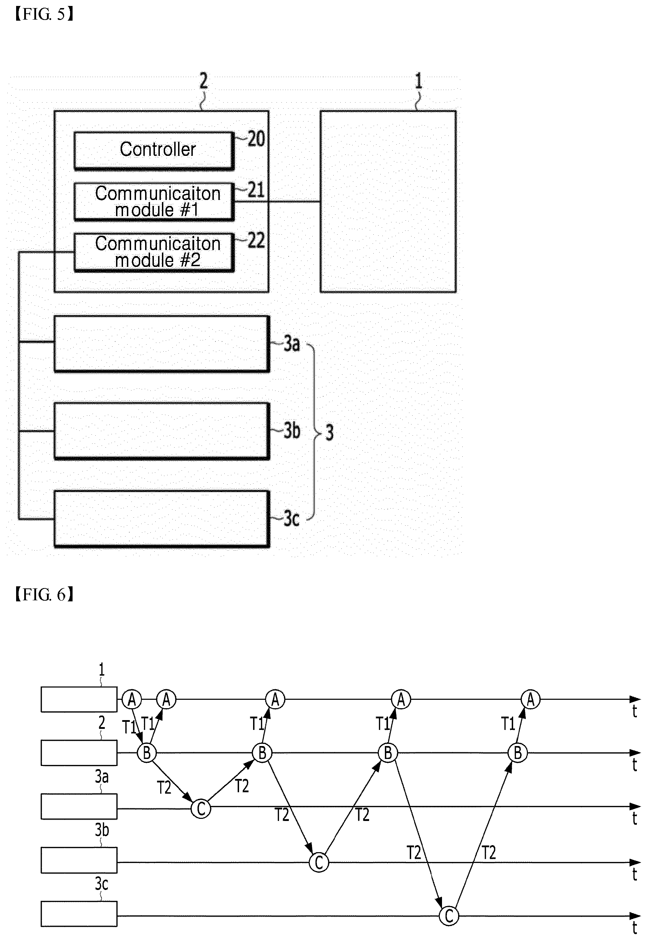

Hereinafter, a conventional heterogeneous fieldbus gateway system will be described with reference to FIGS. 1 to 4. Then, a heterogeneous fieldbus gateway system according to an embodiment of the present disclosure will be described with reference to FIGS. 5 to 7.

FIG. 1 shows a structure diagram of an Ethernet-based fieldbus communication network. This network is based on an advanced Ethernet communication that is expensive.

The user monitors or controls the lowest level device such as inverters 210 to 250 via a fieldbus communication using a control system 100 such as a PC or PLC.

For this purpose, each of the inverters 210 to 250 should be equipped with a communication module 310 to 350 based on Ethernet communication. The control system 100 should be equipped with a communication module having the same communication scheme as the inverters 210 to 250.

In this Ethernet-based fieldbus communication network, the user monitors or controls the lowest level devices 210 to 250 via the Ethernet-based communication modules installed in all the devices 210 to 250. This approach may provide for the best communication performance, but has a problem of a low cost efficiency.

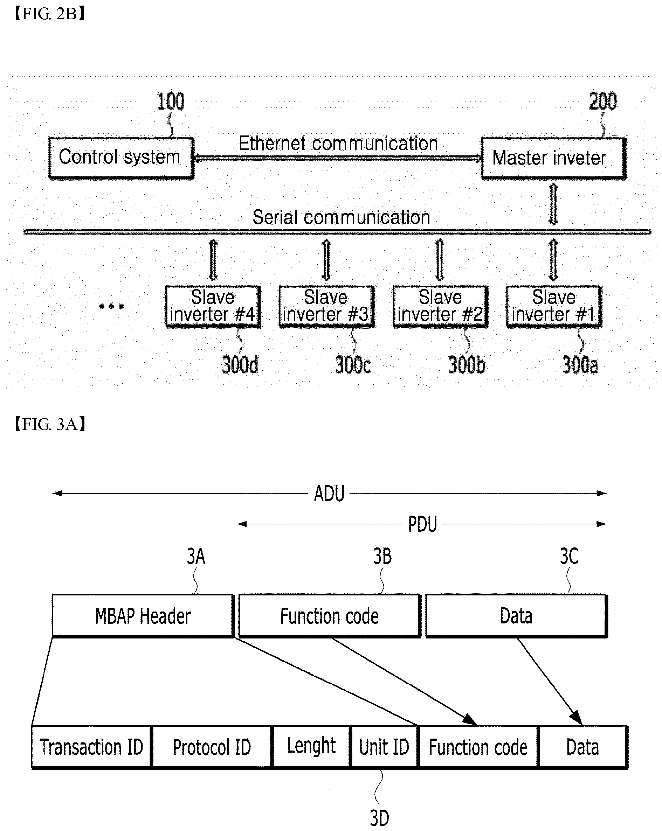

FIG. 2A shows a structure diagram of a conventional heterogeneous fieldbus communication network. FIG. 2B is a schematic structure diagram for illustrating a communication scheme of the conventional heterogeneous fieldbus communication network in FIG. 2A. For example, for cost-effectiveness, in this gateway scheme, the user may monitor or control each lower level device with a serial communication module via a single Ethernet fieldbus communication device.

The user monitors or controls a plurality of inverters 200 and 300 via a fieldbus communication using the control system 100. Only a single inverter 200 (master inverter) is equipped with an Ethernet communication-based communication module 400. Each of remaining inverters 300a, 300b, 300c and 300d (slave inverters; these slave inverters are collectively referred to as 300) is equipped with a serial communication module. Therefore, the master inverter 200 in which the Ethernet communication module 400 is installed acts as a gateway for associating the Ethernet communication and serial communication with each other. In this connection, the control system 100 is equipped with the same communication module, that is as the master inverter 200.

The control system 100 transmits a monitoring or control command to the master inverter 200 to monitor or control the lowest level devices such as the inverters 200 and 300 over the Ethernet communication such as Modbus/TCP. The master inverter 200 equipped with the Ethernet communication module 400 transmits a response to the command to the control system 100 via the Ethernet communication when the command is intended for the master inverter 200. On this other hand, when the command is not intended for the master inverter, the master inverter 200 delivers the command to the other devices 300 via the serial communication such as Modbus/RTU. Then, the master inverter 200 may receive responses from the other devices 300 through the serial communication and then transmit the responses to the control system 100 through the Ethernet communication again.

As described above, the gateway scheme for monitoring or controlling the lower level devices 300 equipped with the serial communication modules respectively over the single Ethernet-based communication fieldbus communication device (master inverter 200) is cost effective but has a speed limit in the monitoring or control operation from the user.

Further, currently widely used Ethernet communication and serial communication-based fieldbus communication protocols are standardized as individual international standards. Thus, a method for mitigating the limitation of the heterogeneous fieldbus communication network using the gateway scheme has to be applied only to the international standards. Thus, there occurs a problem that the method may be applied in a limited manner.

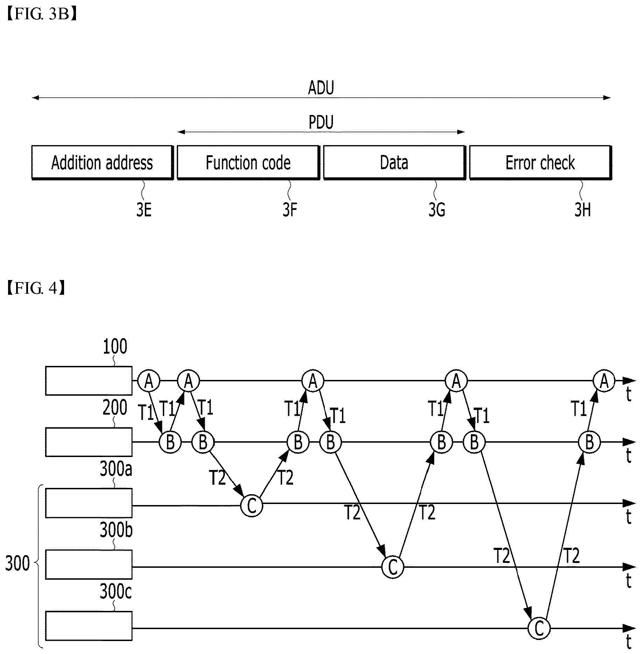

FIG. 3A illustrates a communication protocol of Ethernet communication. FIG. 3B illustrates a communication protocol of serial communication. FIG. 3A shows the Modbus/TCP communication protocol, and FIG. 3B shows the Modbus/RTU communication protocol.

In FIG. 3a, the Ethernet communication protocol may be composed of header information 3A, function code information 3B, and data information 3C for communication between devices. The header information 3A may include a unique identification ID information 3D for mutual-association with the serial communication. In this connection, the entire communication protocol may be referred to as an application data unit (ADU). A combination of the function code information 3B and the data information 3C may be referred to as Protocol Data Unit (PDU).

When the control system 100 including the Ethernet communication module monitors or controls the master inverter 200 including the Ethernet communication module 400, there is no need for mutual-association between the Ethernet communication and the serial communication. In this connection, predetermined data 0xFF may be included into the unique identification ID information 3D which in turn may be transmitted.

Further, when the control system 100 monitors or controls the other devices 300 connected via the serial communication to the master inverter 200, there is no need for mutual-association between the Ethernet communication of the control system 100 and the serial communication. In this connection, ID information of the lower level devices 300 connected to the master inverter 200 may be included in the unique ID information 3D which in turn may be transmitted.

The master inverter 200 again communicates the command to the other devices 300 through a serial communication. In this connection, the serial communication protocol as used is shown in FIG. 3B. The unique identification ID information 3D of the Ethernet communication protocol in FIG. 3a may be used as address information 3E of the other devices 300 in the serial communication protocol.

That is, when receiving the Ethernet communication protocol as shown in FIG. 3A, the master inverter 200 may convert the Ethernet communication protocol to the serial communication protocol as shown in FIG. 3B and transmit the serial communication protocol to the corresponding device 300. In this connection, the function code information 3B and data information 3C of the Ethernet communication protocol may be used as function code information 3F and data information 3G of the serial communication protocol respectively. The serial communication protocol further includes information 3H for error checking.

FIG. 4 shows a time-based graphical representation of an operation flow and a communication flow during associating operation between the Ethernet communication and the serial communication in a conventional manner. In this connection, the number of slave inverters 300 is 3 (300a, 300b, and 300c). In this connection, it is assumed that when the control system 100 monitors or controls the master inverter 200 or slave inverters 300, the control system 100 monitors or control the same number of information parameters between the inverters 200 and 300.

As shown in FIG. 4, a total execution time duration consumed for the control system 100 to monitor or control the master inverter 200 and the slave inverters 300 may be calculated by summing function code generation and response processing time durations A by the control system 100 itself, time durations T1 for which the control system 100 transmits and receives data to and from the master inverter 200 having the Ethernet communication module 400 over the Ethernet communication, function code generation and response processing time durations B by the master inverter 200, time durations T2 for which the master inverter 200 transmits and receives data to and from the slave inverters 300 through the serial communications, and response processing time durations C by the slave inverters 300 equipped with the serial communication modules respectively.

In the heterogeneous fieldbus communication network based on the conventional gateway scheme, there is the master inverter 200 acting as a gateway between the control system 100 and the slave inverters 300. Basically, a 1: 1 communication is performed between the control system 100 and each of the inverters 200 and 300.

That is, one cycle consumed for the control system 100 to monitor or control all four inverters 200 and 300 may be obtained by summing of (5A + 8T1 + 7B + 6T2 + 3C). On the other hand, when all of the lower level inverters 200 and 300 are connected to each other via the Ethernet communication as shown in FIG. 1, one cycle consumed for monitoring or controlling the four inverters 200 and 300 by the control system 100 may be calculated by the summing of (5A + 8T1 + 4B). Therefore, as the number of the lower level devices increases, the performance difference between the former and latter approaches becomes larger.

For this reason, the user may limit the number of the lower level devices to be monitored or controlled based on the gateway scheme in consideration of the cost and performance. In this case, the communication efficiency is degraded.

The gateway system according to an embodiment of the present disclosure is intended to enhance communication efficiency of the heterogeneous fieldbus communication network based on the gateway scheme. This gateway system may improve the communication efficiency via data processing by the master inverter acting as a gateway.

FIG. 5 is a schematic block diagram of a gateway system for a heterogeneous fieldbus in accordance with one embodiment of the present disclosure.

As shown in FIG. 5, a gateway system according to one embodiment of the present disclosure includes a highest-level control device 1, a master inverter 2 connected to the highest-level control device 1 via Ethernet communication and communicating with the control device 1, and a plurality of slave inverters 3a, 3b and 3c (hereinafter, collectively referred to as 3) which are connected to the master inverter 1 over the serial communication and communicate with the master inverter 1.

In one embodiment of the present disclosure, the three slave inverters are illustrated by way of example. The present disclosure is not limited to this number. Fewer or more slave inverters than the three slave inverters may be applied. Further, in one embodiment of the present disclosure, the master inverter 2 is a gateway device while the slave inverters 3 are lower-level devices. This is merely an example. The present disclosure is not limited thereto. Various industrial lower-level devices other than the inverters may be used.

The control device 1 may be, for example, a personal computer (PC) or a programmable logic controller (PLC). The control device 1 and master inverter 2 may be connected to each other over an Ethernet communication such as Modbus/TCP, Ethernet/IP, EtherCAT, PROFInet, etc. However, this is merely an example. The Ethernet communication scheme in the present disclosure is not limited to the above examples. Another Ethernet communication scheme may be used for the connection between the control device 1 and master inverter 2.

Further, the master inverter 2 and the slave inverters 3 are connected to each other over the serial communication scheme such as Modbus/RTU, RS232, or RS485. However, this is merely an example. The serial communication scheme in the present disclosure is not limited to the above examples. Another serial communication scheme may be used for the connection between the master inverter 2 and slave inverter 3.

That is, the communication scheme between the master inverter 2 and the control device 1 is different from the communication scheme between the master inverter 2 and the plurality of slave inverters 3. Thus, this configuration constitutes a heterogeneous fieldbus network.

To this end, the master inverter 2 includes an Ethernet scheme-based first communication module 21 for performing communication with the control device 1, and a serial scheme-based second communication module 22 for communicating with the plurality of slave inverters 3. The master inverter 2 includes a controller 20 for data or data processing.

In one embodiment of the present disclosure, when the control device 1 indicates the same monitoring or control command (having the same parameters) to between the inverters 2 and 3, the master inverter 2 may have data or data processing function to improves the overall communication and data processing efficiency compared to the conventional case.

That is, when the control device 1 sends the same monitoring or control command to between the inverters 2 and 3, the control device 1 includes a predetermined data in the unique identification ID information 3D of FIG. 3A and transmit the 3D. When the data contained in the unique identification ID information 3D is 0xFF, this data may indicate that the command is intend for the master inverter 2.

That is, the control device 1 includes a data indicating that the same monitoring or control command is intended for all of the inverters 2 and 3 into the unique identification ID information 3D included in the header 3A of the ADU to be transmitted to the master inverter 2. Then, the control device may transmit the information 3D to the master inverter 2. In this connection, the data indicating that the inverters 2 and 3 are subjected to the same monitoring or control command may be '0x00', for example. The present disclosure is not limited to this format. Various format datas may be used for indicating that the inverters 2 and 3 are subjected to the same monitoring or control command.

The controller 20 of the master inverter 2 analyzes the indictor in the ADU's unique identification ID information 3D. When it is determined that the control device 1 transmits the same monitoring or control command to between the inverters 2 and 3, the controller 20 transmits a response to the corresponding monitoring or control command to the control device 1 via the first communication module 21 over the Ethernet communication scheme. At the same time, or sequentially, the controller 20 may transmit the corresponding monitoring or control command to the first slave inverter 3a via the second communication module 22 over the serial communication scheme.

In this example, the controller 20 of the master inverter 2 analyzes the data in the unique identification ID information 3D in the ADU, and the controller 20 determines whether the control device 1 is sending the same monitoring or control command to between the inverters 2 and 3. The present disclosure is not limited thereto. This determination may be performed by the first communication module 21. In this case, the first communication module 21 checks the monitoring or control command from the control device 1. The communication module 21 may determine whether the same monitoring or control command has been transmitted from the control device 1 to between all inverters 2 and 3 and then notify the controller 20 of the master inverter 2 of the determination.

In this connection, when the controller 20 of the master inverter 2 sequentially transmits the response and the command to the control device 1 and the first slave inverter 3a respectively, the controller 20 may first send the response to the control device 1. The present disclosure is not limited thereto. Since the controller 20 of the master inverter 2 transmits the response and the command over separate communication modules 21 and 22 respectively, the controller 20 may respectively transmit the response and command to the control device 1 and the first slave inverter 3a at the same time.

The first slave inverter 3a may generate a response to the corresponding command and transmit the response to the second communication module 22 of the master inverter 2 via the serial communication scheme. When the controller 20 of the master inverter 2 receives the response to the corresponding command through the second communication module 22, the controller 20 may transmit the corresponding response to the control device 1 via the first communication module 21 over the Ethernet communication scheme.

At the same time, or sequentially, the controller 20 of the master inverter 2 may transmit the corresponding monitoring or control command to a second slave inverter 3b via the second communication module 22 over the serial communication scheme.

The second slave inverter 3b may generate a response to the corresponding command and transmit the response to the second communication module 22 of the master inverter 2 over the serial communication scheme.

When the controller 20 of the master inverter 2 receives the response to the corresponding command through the second communication module 22, the controller 20 may transmit the corresponding response to the control device 1 via the first communication module 21 over the Ethernet communication scheme.

At the same time or sequentially, the controller 20 of the master inverter 2 may transmit the corresponding monitoring or control command to a third slave inverter 3c via the second communication module 22 over the serial communication scheme.

The third slave inverter 3c may generate a response to the corresponding command and transmits the response to the second communication module 22 of the master inverter 2 via the serial communication scheme.

When the controller 20 of the master inverter 2 receives the response to the corresponding command through the second communication module 22, the controller 20 may transmit the corresponding response to the control device 1 via the first communication module 21 over the Ethernet communication scheme.

In this connection, the controller 20 may simultaneously transmit the corresponding monitoring or control command to the first to third slave inverters 3a, 3b and 3c, respectively. However, the controller 20 cannot receive the responses from the first to third slave inverters 3a, 3b and 3c at the same time using the data serial communication protocol. Accordingly, when the controller 20 simultaneously transmits the corresponding monitoring or control command to the first to third slave inverters 3a, 3b, and 3c, the controller 20 may specify different response time from the first to third slave inverters 3a, 3b, and 3c. In this case, each of the first to third slave inverters 3a, 3b, and 3c may transmit each response to the master inverter 2 over the serial communication scheme at each specified response time.

However, this is limited to the data serial communication protocol. When the master and slave inverters are connected to each other via a communication scheme other than the serial communication scheme, the controller 20 may receive the responses from the first to third slave inverters 3a, 3b and 3c at the same time.

FIG. 6 is an example of a time-based graphical representation of operational and communication flows in accordance with one embodiment of the present disclosure.

When the master inverter 2 receives the data from the control device 1 indicating that the same monitoring or control command is to be transmitted to between the inverters 2 and 3, the master inverter 2 may transmit a response to the corresponding command to the control device 1 through the first communication module 21. At the same time or thereafter, the master inverter 2 may transmit the corresponding command to the first slave inverter 3a via the second communication module 2.

Upon receiving a response from the first slave inverter 3a, the master inverter 2 transmits the response to the control device 1 via the first communication module 21. At the same time or thereafter, the master inverter 2 may transmit the corresponding command to the second slave inverter 3b through the second communication module 22.

Upon receiving a response from the second slave inverter 3b, the master inverter 2 transmits the response to the control device 1 through the first communication module 21. At the same time or thereafter, the master inverter 2 may transmit the corresponding command to the third slave inverter 3c through the second communication module 22.

Upon receiving a response from the third slave inverter 3c, the master inverter 2 may transmit the corresponding response to the control device 1 through the first communication module 21.

Using this configuration, one cycle for monitoring or controlling all four inverters 2 and 3 by the control device 1 may be calculated by summing of (5A + 5T1 + 4B + 6T2 + 3C). This cycle length becomes shorter than the conventional cycle length (5A + 8T1 + 7B + 6T2 + 3C).

In one embodiment of the present disclosure, an example in which the control device 1 transmits the same monitoring or control command to between all of the inverters 2 and 3 has been described. However, the present disclosure may be applied to a case when the control device 1 transmits the same monitoring or control command to between not all but some of the lower-level inverters.

That is, for example, the master inverter 2 and the plurality of slaves 3 may be grouped into a predetermined number of groups. In this case, the master inverter 2 acting as the gateway may be common to all groups.

In one embodiment of the present disclosure, a first group may be composed of the master inverter 2, the first slave inverter 3a and the third slave inverter 3c; and a second group may be composed of the master inverter 2, the first slave inverter 3a, and the second slave inverter 3b. However, it is to be understood that this is merely an example, and, thus, a type and number of devices included in each group may vary depending on various environments such as a site where the lower-level industrial devices are disposed. This grouping information about the lower-level devices may be previously configured and stored in storages (not shown) of the control device 1 and the master inverter 2.

Hereinafter, a case when the control device 1 transmits the same monitoring or control command to the first group will be described.

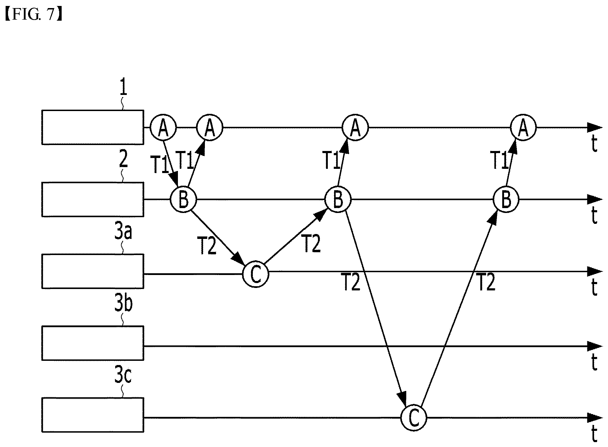

FIG. 7 is an example of a time-based graphical representation of an operational flow and a communication flow in accordance with another embodiment of the present disclosure.

The control device 1 may include a data indicating that the first group of the lower-level devices is subjected to the same monitoring or control command into the unique ID information 3D included in the header 3A of the ADU to be transmitted to the master inverter 2. Then, the device 1 may send the 3D to the master inverter 2. In this connection, the data indicating that the same monitoring or control command is transmitted to the first group of the lower-level devices may be, for example, '0x01', but is not limited thereto. Variously formatted datas may be used to indicating that the same monitoring or control command is transmitted to the first group of the lower-level devices.

When the controller 20 of the master inverter 2 confirms via the data in the ADU's unique identification ID information 3D that the same monitoring or control command is transmitted to the first group of the lower-level devices, the controller 20 may send a response to the corresponding monitoring or control command via the first communication module 21 over the Ethernet communication scheme. At the same time or sequentially, the corresponding monitoring or control command may be transmitted from the controller 20 to the first slave inverter 3a included in the first group via the second communication module 22 over the serial communication scheme.

Upon receiving a response from the first slave inverter 3a, the master inverter 2 transmits the corresponding response to the control device 1 through the first communication module 21. Simultaneously or thereafter, the master inverter 2 may transmit the corresponding command to the third slave inverter 3c included in the first group through the second communication module 22.

Upon the master inverter 2 receiving a response from the third slave inverter 3c, the master inverter 2 may transmit the corresponding response to the control device 1 through the first communication module 21.

Using this configuration, the control device 1 can monitor or control the first group of inverters. In a similar manner, a further same monitoring or control command may be sent to the second group of the inverters.

Thus, according to the present disclosure, when the from control device 1 transmits the same monitoring or control command to all or some of the lowest level devices, the master inverter 2 directly sends the corresponding command to the slave inverters 3 without intervention of the control device 1. This may improve the efficiency of communication data processing as compared with the prior art. In the conventional case, when the same monitoring or control command is transmitted to all the lowest level devices, this takes a total duration (5A + 8T1 + 7B + 6T2 + 3C). However, in accordance with the present disclosure, a total duration amounts to (5A + 5T1 + 4B + 6T2 + 3C). Thus, the present method may allow the total execution time for sending the monitoring or control command to the lower-level devices and receiving the responses therefrom to be reduced.

This shortening rate of the execution time duration increases as the number of the lower-level devices increases. This may allow the number of the lower-level devices to be increased, thus reducing a system cost and increasing an utility of the system, compared with the conventional fieldbus communication scheme. This may ensure the system product competitiveness.

## Claims

1. A heterogeneous fieldbus-based gateway system including a master inverter (2) connected to and communicating with a control device (1) and a plurality of slave inverters (3),
wherein the control device (1) and the master inverter (2) are connected to each other over an Ethernet communication scheme,
wherein the master inverter (2) and the slave inverters (3) are connected to each other over a serial communication scheme,
wherein the control device (1) is configured to transmit, to the master inverter (2), a data indicating that a same monitoring or control command, by using a unique identification, ID, information contained in a header of a protocol of the Ethernet communication scheme, is to be transmitted to all of the master inverter (2) and the plurality of slave inverters (3), wherein the data is contained in the unique ID information contained in the header of the protocol of the Ethernet communication scheme; and
wherein when the master inverter (2) determines based on the data that the control device (1) transmits the same monitoring or control command to all of the master inverter (2) and the plurality of slave inverters (3), the master inverter (2) is configured to transmit a response to the same monitoring or control command to the control device (1) and to transmit the same monitoring or control command to each of the slave inverters (3), to receive each response to the same monitoring or control command from each of the slave inverters (3) and to transmit each response to the same monitoring or control command from each of the slave inverters (3) to the control device (1),
wherein the master inverter (2) includes:
a first communication module (21) configured to communicate with the control device (1) over the Ethernet communication scheme;
a second communication module (22) configured to communicate with each of the slave inverters (3) over the serial communication scheme; and
a controller (20) configured to:
communicate via the first communication module (21) with the control device (1) to receive the monitoring or control command from the control device (1) and transmit the response to the same monitoring or control command to the control device (1); and
communicate via the second communication module (22) with the plurality of slave inverters (3) to transmit the monitoring or control command to the slave inverters (3) and to receive each response to the same monitoring or control command from each of the slave inverters (3).

2. The heterogeneous fieldbus-based gateway system of claim 1, wherein when the controller (20) determines based on the data that the control device (1) transmits the same monitoring or control command to all of the master inverter (2) and the plurality of slave inverters (3),
the controller (20) is further configured to:
transmit the response to the same monitoring or control command via the first communication module (21) to the control device (1);
transmit the same monitoring or control command via the second communication module (22) to a first slave inverter (3a) among the plurality of slave inverters (3), receive a response to the same monitoring or control command from the first slave inverter (3a) via the second communication module (22), and transmit the response from the first slave inverter (3a) to the control device (1) via the first communication module (21); and
transmit the same monitoring or control command via the second communication module (22) to a second slave inverter (3b) among the plurality of slave inverters (3), receive a response to the same monitoring or control command from the second slave inverter (3b) via the second communication module (22), and transmit the response from the second slave inverter (3b) to the control device (1) via the first communication module (21).

3. The heterogeneous fieldbus-based gateway system of claim 2, wherein the controller (20) is further configured to simultaneously or sequentially perform the transmission of the response thereof to the control device (1) and the transmission of the same monitoring or control command to the first slave inverter (3a).

4. The heterogeneous fieldbus-based gateway system of claim 2, wherein the controller (20) is further configured to simultaneously or sequentially perform the transmission of the response of the first slave inverter (3a) to the control device (1) and the transmission of the same monitoring or control command to the second slave inverter (3b).

5. The heterogeneous fieldbus-based gateway system of claim 2, wherein the controller (20) is further configured to simultaneously perform the transmission of the same monitoring or control command to the first slave inverter (3a) and transmission of the same monitoring or control command to the second slave inverter (3b).

6. The heterogeneous fieldbus-based gateway system of claim 5, wherein the controller (20) is further configured to specify a response time of the first slave inverter 3a and a response time of the second slave inverter (3b) differently from each other.

## Patentansprüche

1. Heterogenes feldbusbasiertes Gatewaysystem, das einen Master-Inverter (2) enthält, der mit einem Steuergerät (1) und einer Vielzahl von Slave-Invertern (3) verbunden ist und mit diesen kommuniziert,
wobei das Steuergerät (1) und der Master-Inverter (2) über ein Ethernet-Kommunikationsschema miteinander verbunden sind, wobei der Master-Inverter (2) und die Slave-Inverter (3) über ein serielles Kommunikationsschema miteinander verbunden sind,
wobei das Steuergerät (1) dazu konfiguriert ist, Daten an den Master-Inverter (2) zu übertragen, die durch die Nutzung einer eindeutigen Identifikation, ID, Information, die in einem Header eines Protokolls des Ethernet-Kommunikationsschemas enthalten ist, angeben, dass ein gleicher Überwachungs- oder
Steuerbefehl an alle aus dem Master-Inverter (2) und der Vielzahl von Slave-Invertern (3) übertragen werden soll, wobei die Daten in der eindeutigen ID-Information enthalten sind, die im Header des Protokolls des Ethernet-Kommunikationsschemas enthalten ist; und
wobei, wenn der Master-Inverter (2) basierend auf den Daten bestimmt, dass das Steuergerät (1) den gleichen Überwachungs- oder Steuerbefehl an alle aus dem Master-Inverter (2) und der Vielzahl von Slave-Invertern (3) überträgt, der Master-Inverter (2) dazu konfiguriert ist, eine Antwort auf den gleichen Überwachungs- oder Steuerbefehl an das Steuergerät (1) zu übertragen und den gleichen Überwachungs- oder Steuerbefehl an jeden der Slave-Inverter (3) zu übertragen, die jeweilige Antwort auf den gleichen Überwachungs- oder Steuerbefehl von jedem der Slave-Inverter (3) zu empfangen und die jeweilige Antwort auf den gleichen Überwachungs- oder Steuerbefehl von jedem der Slave-Inverter (3) an das Steuergerät (1) zu übertragen,
wobei der Master-Inverter (2) Folgendes beinhaltet:
ein erstes Kommunikationsmodul (21), das dazu konfiguriert ist, über das Ethernet-Kommunikationsschema mit dem Steuergerät (1) zu kommunizieren;
ein zweites Kommunikationsmodul (22), das dazu konfiguriert ist, über das serielle Kommunikationsschema mit jedem der Slave-Inverter (3) zu kommunizierten; und
eine Steuerung (20), die dazu konfiguriert ist:
über das erste Kommunikationsmodul (21) mit dem Steuergerät (1) zu kommunizieren, um den Überwachungs- oder Steuerbefehl von dem Steuergerät (1) zu empfangen und die Antwort auf den gleichen Überwachungs- oder Steuerbefehl an das Steuergerät (1) zu übertragen; und
über das zweite Kommunikationsmodul (22) mit der Vielzahl von Slave-Invertern (3) zu kommunizieren, um den Überwachungs- oder Steuerbefehl an die Slave-Inverter (3) zu übertragen und die jeweilige Antwort auf den gleichen Überwachungs- oder Steuerbefehl von jedem der Slave-Inverter (3) zu empfangen.

2. Heterogenes feldbusbasiertes Gatewaysystem nach Anspruch 1, wobei, wenn die Steuerung (20) basierend auf den Daten bestimmt, dass das Steuergerät (1) den gleichen Überwachungs- oder Steuerbefehl an alle aus dem Master-Inverter (2) und der Vielzahl von Slave-Invertern (3) überträgt,
die Steuerung (20) ferner dazu konfiguriert ist:
die Antwort auf den gleichen Überwachungs- oder Steuerbefehl über das erste Kommunikationsmodul (21) an das Steuergerät (1) zu übertragen;
den gleichen Überwachungs- oder Steuerbefehl über das zweite Kommunikationsmodul (22) an einen ersten Slave-Inverter (3a) aus der Vielzahl von Slave-Invertern (3) zu übertragen, eine Antwort auf den gleichen Überwachungs- oder Steuerbefehl über das zweite Kommunikationsmodul (22) von dem ersten Slave-Inverter (3a) zu empfangen und die Antwort von dem ersten Slave-Inverter (3a) über das erste Kommunikationsmodul (21) an das Steuergerät (1) zu übertragen; und
den gleichen Überwachungs- oder Steuerbefehl über das zweite Kommunikationsmodul (22) an einen zweiten Slave-Inverter (3b) aus der Vielzahl von Slave-Invertern (3) zu übertragen, eine Antwort auf den gleichen Überwachungs- oder Steuerbefehl über das zweite Kommunikationsmodul (22) von dem zweiten Slave-Inverter (3b) zu empfangen und die Antwort von dem zweiten Slave-Inverter (3b) über das erste Kommunikationsmodul (21) an das Steuergerät (1) zu übertragen.

3. Heterogenes feldbusbasiertes Gatewaysystem nach Anspruch 2, wobei die Steuerung (20) ferner dazu konfiguriert ist, gleichzeitig oder sequenziell die Übertragung der Antwort derselben an das Steuergerät (1) und die Übertragung des gleichen Überwachungs- oder Steuerbefehls an den ersten Slave-Inverter (3a) durchzuführen.

4. Heterogenes feldbusbasiertes Gatewaysystem nach Anspruch 2, wobei die Steuerung (20) ferner dazu konfiguriert ist, gleichzeitig oder sequenziell die Übertragung der Antwort des ersten Slave-Inverters (3a) an das Steuergerät (1) und die Übertragung des gleichen Überwachungs- oder Steuerbefehls an den zweiten Slave-Inverter (3b) durchzuführen.

5. Heterogenes feldbusbasiertes Gatewaysystem nach Anspruch 2, wobei die Steuerung (20) ferner dazu konfiguriert ist, gleichzeitig die Übertragung des gleichen Überwachungs- oder Steuerbefehls an den ersten Slave-Inverter (3a) und die Übertragung des gleichen Überwachungs- oder Steuerbefehls an den zweiten Slave-Inverter (3b) durchzuführen.

6. Heterogenes feldbusbasiertes Gatewaysystem nach Anspruch 5, wobei die Steuerung (20) ferner dazu konfiguriert ist, eine Antwortzeit des ersten Slave-Inverters (3a) und eine Antwortzeit des zweiten Slave-Inverters (3b) unterschiedlich voneinander zu spezifizieren.

## Revendications

1. Système de passerelle basé sur un bus de terrain hétérogène incluant un onduleur maître (2) connecté à un dispositif de commande (1) et à une pluralité d'onduleurs esclaves (3) et communiquant avec ceux-ci,
dans lequel le dispositif de commande (1) et l'onduleur maître (2) sont connectés l'un à l'autre sur un schéma de communication Ethernet,
dans lequel l'onduleur maître (2) et les onduleurs esclaves (3) sont connectés les uns aux autres sur un schéma de communication série,
dans lequel le dispositif de commande (1) est configuré pour transmettre, à l'onduleur maître (2), des données indiquant qu'un même ordre de surveillance ou de commande, en utilisant une identification, ID, unique des informations contenues dans un en-tête d'un protocole du schéma de communication Ethernet, doit être transmis à l'ensemble de l'onduleur maître (2) et de la pluralité d'onduleurs esclaves (3), dans lequel les données sont contenues dans les informations d'ID unique contenues dans l'en-tête du protocole du schéma de communication Ethernet ; et
dans lequel lorsque l'onduleur maître (2) détermine sur la base des données que le dispositif de commande (1) transmet le même ordre de surveillance ou de commande à l'ensemble de l'onduleur maître (2) et de la pluralité d'onduleurs esclaves (3), l'onduleur maître (2) est configuré pour transmettre une réponse au même ordre de surveillance ou de commande au dispositif de commande (1) et pour transmettre le même ordre de surveillance ou de commande à chacun des onduleurs esclaves (3), pour recevoir chaque réponse au même ordre de surveillance ou de commande de chacun des onduleurs esclaves (3) et pour transmettre chaque réponse au même ordre de surveillance ou de commande de chacun des onduleurs esclaves (3) au dispositif de commande (1),
dans lequel l'onduleur maître (2) inclut :
un premier module de communication (21) configuré pour communiquer avec le dispositif de commande (1) sur le schéma de communication Ethernet ;
un deuxième module de communication (22) configuré pour communiquer avec chacun des onduleurs esclaves (3) sur le schéma de communication série ; et
un dispositif de commande (20) configuré pour :
communiquer via le premier module de communication (21) avec le dispositif de commande (1) pour recevoir l'ordre de surveillance ou de commande depuis le dispositif de commande (1) et transmettre la réponse au même ordre de surveillance ou de commande au dispositif de commande (1) ; et
communiquer via le deuxième module de communication (22) avec la pluralité d'onduleurs esclaves (3) pour transmettre l'ordre de surveillance ou de commande aux onduleurs esclaves (3) et pour recevoir chaque réponse au même ordre de surveillance ou de commande de chacun des onduleurs esclaves (3).

2. Système de passerelle basé sur un bus de terrain hétérogène selon la revendication 1, dans lequel lorsque le dispositif de commande (20) détermine sur la base des données que le dispositif de commande (1) transmet le même ordre de surveillance ou de commande à l'ensemble de l'onduleur maître (2) et de la pluralité d'onduleurs esclaves (3),
le dispositif de commande (20) est en outre configuré pour :
transmettre la réponse au même ordre de surveillance ou de commande via le premier module de communication (21) au dispositif de commande (1) ;
transmettre le même ordre de surveillance ou de commande via le deuxième module de communication (22) à un premier onduleur esclave (3a) parmi la pluralité d'onduleurs esclaves (3),
recevoir une réponse au même ordre de surveillance ou de commande depuis le premier onduleur esclave (3a) via le deuxième module de communication (22), et transmettre la réponse du premier onduleur esclave (3a) au dispositif de commande (1) via le premier module de communication (21) ; et
transmettre le même ordre de surveillance ou de commande via le deuxième module de communication (22) à un deuxième onduleur esclave (3b) parmi la pluralité d'onduleurs esclaves (3), recevoir une réponse au même ordre de surveillance ou de commande du deuxième onduleur esclave (3b) via le deuxième module de communication (22), et transmettre la réponse du deuxième onduleur esclave (3b) au dispositif de commande (1) via le premier module de communication (21).

3. Système de passerelle basé sur un bus de terrain hétérogène selon la revendication 2, dans lequel le dispositif de commande (20) est en outre configuré pour effectuer simultanément ou séquentiellement la transmission de sa réponse au dispositif de commande (1) et la transmission du même ordre de surveillance ou de commande au premier onduleur esclave (3a).

4. Système de passerelle basé sur un bus de terrain hétérogène selon la revendication 2, dans lequel le dispositif de commande (20) est en outre configuré pour effectuer simultanément ou séquentiellement la transmission de la réponse du premier onduleur esclave (3a) au dispositif de commande (1) et la transmission du même ordre de surveillance ou de commande au deuxième onduleur esclave (3b).

5. Système de passerelle basé sur un bus de terrain hétérogène selon la revendication 2, dans lequel le dispositif de commande (20) est en outre configuré pour effectuer simultanément la transmission du même ordre de surveillance ou de commande au premier onduleur esclave (3a) et la transmission du même ordre de surveillance ou de commande au deuxième onduleur esclave (3b).

6. Système de passerelle basé sur un bus de terrain hétérogène selon la revendication 5, dans lequel le dispositif de commande (20) est en outre configuré pour spécifier un temps de réponse du premier onduleur esclave 3a et un temps de réponse du deuxième onduleur esclave (3b) différemment l'un de l'autre.
